# EUROPÄISCHE PATENTSCHRIFT

(11) **EP 0 584 444 B1**
(45) Veröffentlichungstag und Bekanntmachung des Hinweises auf die Patenterteilung: **05.06.1996**
(21) Anmeldenummer: 93103263.5
(22) Anmeldetag: 02.03.1993
(51) Int. Cl.: H01R 25/16

(54) **Montageelement für Installationskanäle**
Mounting element for installation channel
Elément de montage pour canal d'installation

(30) Priorität: 09.03.1992 DE 9203112 U
(43) Veröffentlichungstag der Anmeldung: 02.03.1994
(60) Teilanmeldung: 95111289.5
(73) Patentinhaber: Tehalit GmbH, D-67716 Heltersberg (DE)
(72) Erfinder: Riccardi, Oliver, W-5885 Schalksmühle (DE); Koch, Fritz Eduard, W-5885 Schalksmühle (DE); Pollak, Gottfried, Dipl.-Ing.(FH), W-6757 Waldfischbach-Burgalben (DE); Scherer, Peter, Dipl.-Ing.(FH), W-6607 Quierschied (DE); Lutz, Karl, W-6757 Waldfischbach-Burgalben (DE)
(74) Vertreter: Patentanwälte Dipl.-Ing. F.W. Möll Dipl.-Ing. H.Ch. Bitterich

(56) Entgegenhaltungen:
- DE-U- 7 040 540
- DE-U- 7 728 373

## Beschreibung

Die Erfindung betrifft Montageelemente zum lösbaren Befestigen von Elektro-Installationsgeräten in Installationskanälen, die an ihrer Kanalrückwand eine Längsnut mit etwa T-förmigem Querschnitt besitzen, gemäß dem Oberbegriff des Anspruchs 1. Ein solches Montageelement ist beispielsweise bekannt aus der DE-U-86 09 417.

Wesentliche Aufgabe dieser Art von Montageelementen ist es, Elektro-Installationsgeräte schnell, sicher, dauerfest und trotzdem lösbar in Installationskanälen befestigen zu können. Wahrend die genannte DE-U-86 09 417 nur einen geeigneten Befestigungsmechanismus zum Gegenstand hat, zeigt die DE-U-77 28 102 ein solches Montageelement in Form einer Geräteeinbaudose mit etwa quadratischem Grundriß und einem am Dosenboden angelenkten, den Dosenboden durchgreifenden Klappmechanismus als Befestigungselement. Die Befestigung des Elektro-Installationsgerätes in dieser Gerätedose erfolgte in einfachster Weise mittels Schrauben.

Eine Besonderheit der in der DE-U-86 09 417 beschriebenen Klemmechanik ist, daß das öffnen und Schließen lediglich eine Drehbewegung von 90 Grad benötigt und daß das Installationsgerät nicht demontiert werden muß, jedenfalls solange der in dem Drehelement vorgesehene Schraubendreherschlitz zugänglich ist. Da die bekannte Klemmechanik jedoch noch aus mehreren Teilen zusammengesetzt ist, war der Wunsch nach einer Vereinfachung aufgetaucht, ohne daß jedoch die Festigkeit und Sicherheit der Klemmbefestigung darunter leiden sollte.

Der vorliegenden Erfindung liegt daher die Hauptaufgabe zugrunde, ein Montageelement der eingangs genannten Art dahingehend zu verbessern, daß die Zahl der benötigten Einzelteile reduziert und die Werksmontage erheblich vereinfacht werden kann. Des weiteren sollte das Montageelement im Hinblick auf eine möglichst einfache Montage und Demontage des eigentlichen Installationsgerätes hin weiterentwickelt werden.

Die genannte Hauptaufgabe wird gelöst durch ein gattungsgemäßes Montageelement mit den Merkmalen gemäß Kennzeichen des Anspruchs 1.

Der wesentliche Vorteil liegt darin, daß das Klemmteil, welches drehbar sowie heb- und senkbar in das Bodenteil des Montageelements eingesetzt wird, nur noch aus einem einzigen Stück besteht. Die 90-Grad-Drehung wird von vorne mit Hilfe eines Schraubendrehers bewirkt. In den Gehäuseboden eingeformte Rampen erzeugen die Hubbewegung, die die endgültige Klemmverbindung zwischen Installationskanal und Montageelement herstellt. Dabei ist auch nier durch entsprechende Ausbildung der Rampensteigungen dafür gesorgt, daß die Hubbewegung erst in der letzten Hälfte der Drehbewegung erzeugt wird. Während der ersten Hälfte der Drehbewegung wird lediglich der Klemmkopf in der Kanallängsnut verdreht, so daß das Montageelement zwar im Installationskanal gehalten wird, jedoch noch seitlich verschoben und positionsgenau justiert werden kann.

Wie schon beim Stand der Technik kann auch das erfindungsgemäße Montageelement als Gerätedose mit zwei Längswänden und zwei Querwänden ausgebildet sein, jetzt jedoch vorzugsweise mit rechteckiger Grundfläche. In diesem Zusammennang stellt es eine erfindungswesentliche Erweiterung dar, in die Querwände spezielle Kabeleinführungsöffnungen einzuarbeiten und zwar an den beiden Querwänden von der Mittelebene aus zur selben Längswand hin verschoben. Installationskanäle werden üblicherweise mit Hilfe von isolierenden Trennwänden, die in die Längsnut an der Kanalrückwand eingehängt werden, in wenigstens zwei elektrisch gegeneinander isolierte Abteile unterteilt. Dank der asymmetrisch angeordneten Kabeleinführungsöffnungen ist es nun durch einfaches Wenden des Montageteils möglich, Kabel aus dem einen oder dem anderen Abteil in die Gerätedose einzuführen, ohne die durch die Mitteltrennwand gegebene Isolierung zu durchbrechen.

Die schon erwähnte Teilaufgabe, die Montage und Demontage der Elektro-Installationsgeräte in der Gerätedose zu vereinfachen, wird mit Hilfe eines Bajonettverschlusses gelöst, wobei in den Längswänden der Gerätedose Bajonettverschlußnuten angebracht werden, die mit am Gehäuse des Elektro-Installationsgerätes angebrachten Bajonettverschlußnocken korrespondieren. Sind die Bajonettverschlußnocken etwa L- oder T-förmig ausgebildet, laufen die Bajonettverschlußnuten in die Längswände durchbrechende Bajonettöffnungen aus. Auf diese Weise hält das eingesetzte Elektro-Installationsgerät die Längswände der Gerätedose formschlüssig; diese können also bei Druck oder Zug auf das Installationsgerät nicht federnd ausweichen, das Installationsgerät kann sich nicht von selbst lösen.

Um das Elektro-Installationsgerät mechanisch fixieren zu können, ist in wenigstens einem der freien Endbereiche der Gerätedose ein Deckel, vorzugsweise Klappdeckel, angeformt, der in geschlossenem Zustand nicht nur das Elektro-Installationsgerät blockiert sondern auch die zum Anschließen der elektrischen Leitungen und Drähte vorgesehenen Anschlußleisten abdeckt.

Diese und weitere Ausgestaltungen der vorliegenden Erfindung sind Gegenstand der Unteransprüche. Sie werden zusätzlich und beispielhaft erläutert anhand der Zeichnung. Darin zeigen
- Fig. 1: eine erste perspektivische Darstellung eines zu einer Gerätedose weiterentwickelten Montageelements,
- Fig. 2: eine weitere perspektivische Darstellung der Gerätedose nach Fig. 1 mit eingesetztem Elektro-Installationsgerät,
- Fig. 3: einen Querschnitt durch einen Leitungs-Installationskanal mit montierter, teilweise aufgebrochener Gerätedose und darin eingesetztem Elektro-Installationsgerät,
- Fig. 4: ausschnittsweise den Bodenbereich der Gerätedose nach Fig. 3, jedoch mit um 90 Grad gedrehtem Klemmteil,
- Fig. 5: eine Draufsicht auf die Innenseite des Montageelements mit geöffneten Deckeln,
- Fig. 6: eine Draufsicht auf die Unterseite des Montageelements der Fig. 5, ebenfalls mit geöffneten Deckeln,
- Fig. 7: eine Draufsicht auf die Oberseite des Klemmteils zur lösbaren Befestigung des Montageelements in der T-Nut von Installationskanälen, ergänzt zu einem Schub-Kurbel-Getriebe,
- Fig. 8: eine Seitenansicht des Klemmteils der Fig. 7,
- Fig. 9: eine Draufsicht auf die Unterseite des Klemmteils der Fig. 7 und 8,
- Fig. 10: eine Draufsicht auf die Unterseite des Elektro-Installationsgerätes,
- Fig. 11: eine perspektivische Darstellung einer Gerätedose mit Elektro-Installationsgerät in Form einer TAE-Funktionseinheit und
- Fig. 12: eine perspektivische Darstellung einer Gerätedose mit Elektro-Installationsgerät in Form einer Datensteckvorrichtung.

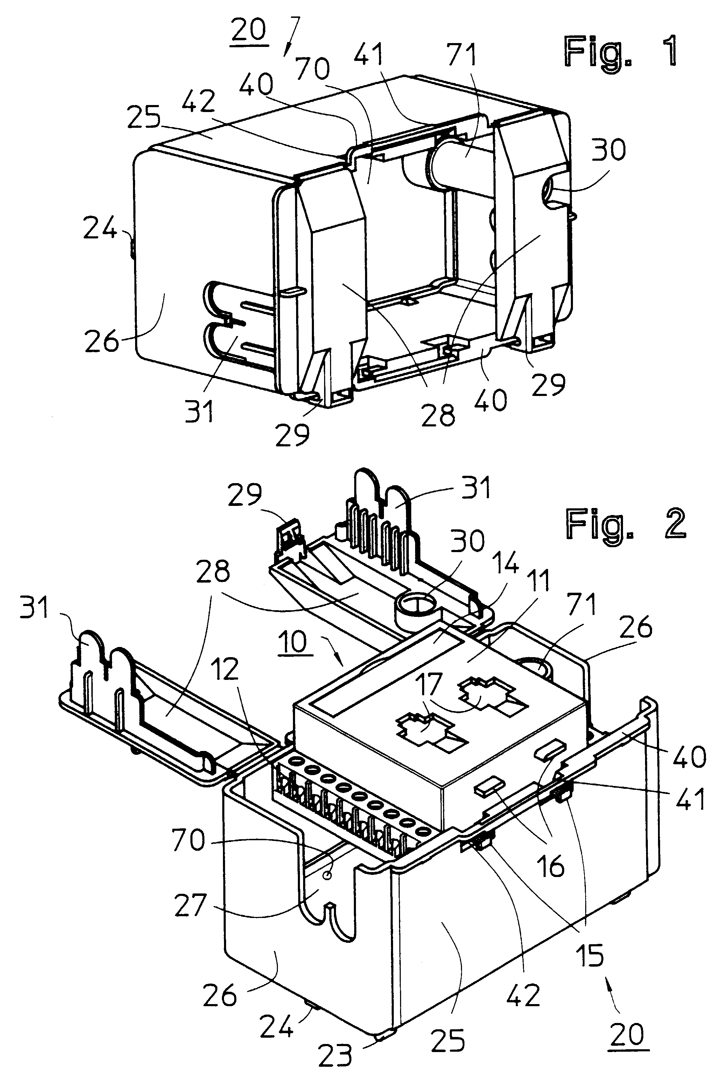

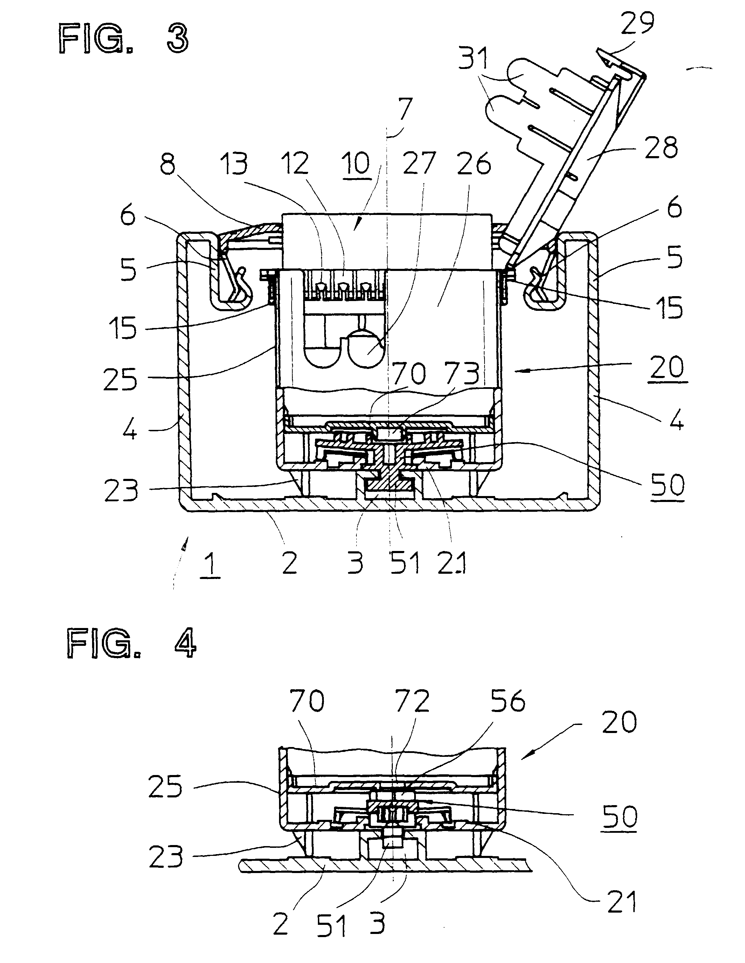

Die Fig. 1 und 2 zeigen in unterschiedlichen perspektivischen Darstellungen eine Geräteeinbaudose 20 zur Lösbaren Montage in Installationskanälen 1 (Fig. 3) einerseits und zur Aufnahme von Elektro-Installationsgeräten (Fig. 2) andererseits. Man erkennt das eigentliche Montageelement 20, bestehend aus einem Bodenteil 21, zwei Längswänden 25 und zwei Querwänden 26. Füße 23 und zentrische Führungsnocken 24 an der Unterseite des Bodenteils 21 dienen der Befestigung im Installationskanal 1, wie es anhand der Fig. 3 noch näher erläutert wird. Das Bodenteil 21 ist rechteckig, die Oberseite der Geräteeinbaudose 20 ist offen. Ihre beiden Endbereiche sind mit Hilfe von Klappdeckeln 28 verschließbar. Zu diesem Zweck sind die Klappdeckel 28 mit Rastverschlüssen 29 ausgerüstet.

In die Querwände 26 sind jeweils zwei torbogenartige Kabeleinführungsöffnungen 27 eingeformt. Beide Kabeleinführungsöffnungen 27 sind zur selben Längswand 25 hin verschoben. Der Sinn dieser Maßnahme wird anhand Fig. 3 noch näher erläutert werden.

An den Klappdeckeln 28 sind Abdeckungen 31 angeformt, die bei geschlossenen Klappdeckeln 28 nicht benützte Kabeleinführungsöffnungen 27 abdecken. Die Abdeckungen 31 sind bereichsweise elastisch abbiegbar, müssen also nicht entfernt werden.

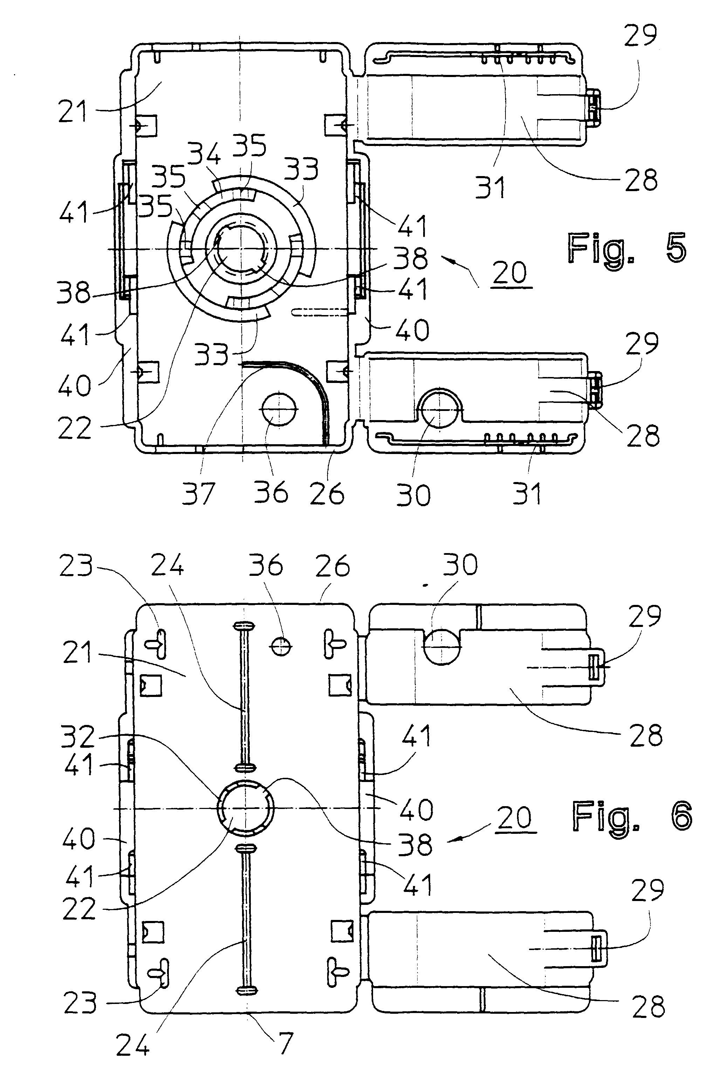

In die Geräteeinbaudose 20 ist ein Zwischenboden 70 eingerastet, der die eigentliche Klemmechanik abdeckt. Die Klemmechanik selbst wird anhand der Fig. 5 bis 9 noch näher erläutert. Auf dem Zwischenboden 70 ist ein Schutzzylinder 71 errichtet, der mit einer Deckelöffnung 30 in einem der Klappdeckel 28 fluchtet. Durch Deckelöffnung 30 und Schutzzylinder 71 kann ein Schraubendreher gesteckt werden, um die Klemmechanik zu betätigen, ohne daß die Gefahr besteht, daß in der Geräteeinbaudose 20 frei liegende Drähte und Leitungen beschädigt werden.

Fig. 2 zeigt bei geöffneten Klappdeckeln 28 ein eingesetztes Elektro-Installationsgerät 10, hier eine Western-Telefon-Doppelsteckdose. An den beiden Seitenwänden des Gerätegehäuses 11 sind T- bzw. L-förmige Bajonettverschlußnocken 15 angeformt. In den Seitenwänden 25 der Geräteeinbaudose 20 sind entsprechende Bajonettverschlußnuten 41 eingeformt, die in Bajonettverschlußöffnungen 42 enden. Außerdem ist der obere Rand der Längswände 25 mit einer Randverstärkung 40 versehen. Dank der T- bzw. L-Form der Bajonettverschlußnocken 15 besteht eine formschlüssige Verbindung zwischen den Seitenwänden 25 der Geräteeinbaudose 20 und dem Gerätegehäuse 11, so daß die Längswände 25 bei Druck oder Zug auf das Installationsgerät 10 nicht seitlich ausweichen können.

Das hier dargestellte Elektro-Installationsgerät 10 besitzt vorne und hinten je eine Anschlußleiste 12, an der die elektrischen Drähte und Leitungen angeschlossen werden. Die Anschlußleisten 12 sind bei geöffneten Klappdeckeln 28 gut zugänglich. Sobald der vordere Klappdeckel 28 geschlossen wird, wird das Elektro-Installationsgerät 10 mechanisch blockiert. Auch wenn beide Deckel 28 geschlossen sind, bleibt der Klemmechanismus durch die Deckelöffnung 30 und den Schutzzylinder 71 hindurch zugänglich.

Die Frontseite des Gerätegehäuses 11 trägt hier zwei Steckbuchsen 17 sowie ein unverlierbar angelenktes, herausklappbares, reinigungssicheres Kennzeichnungsschild 14, das somit den Steckbuchsen 17 unverwechselbar zugeordnet ist.

Fig. 3 zeigt einen Querschnitt durch einen handelsüblichen Installationskanal 1 mit Kanalrückwand 2, zwei Kanalseitenwänden 4 mit je einem Kanalverschlußprofil 5 und einem aufgerasteten Kanaldeckel 6. Die Kanalrückwand 2 trägt auf ihrer Innenseite eine Längsnut 3 mit etwa T-förmigem Querschnitt.

In den Installationskanal 1 eingesetzt erkennt man das als Geräteeinbaudose ausgebildete Montageelement 20 mit eingesetztem Elektro-Installationsgerät 10. Der vordere Klappdeckel 28 ist geöffnet. Man erkennt einen Teil der Anschlußleiste 12. Die Drahteinführungsöffnungen 13 sind trichterförmig ausgebildet, um das Einführen der Drähte und Leitungen zu erleichtern.

Eingezeichnet ist auch die Mittelebene 7 des Installationskanals 1. Dank der asymmetrischen Anordnung der Kabeleinführungsöffnungen 27 befinden sich diese je nach Montagerichtung des Montageelements 20 entweder links oder rechts der Mittelebene 7, je nach dem, ob elektrische Leitungen aus dem einen oder dem anderen Teil des Installationskanals 1 angeschlossen werden sollen.

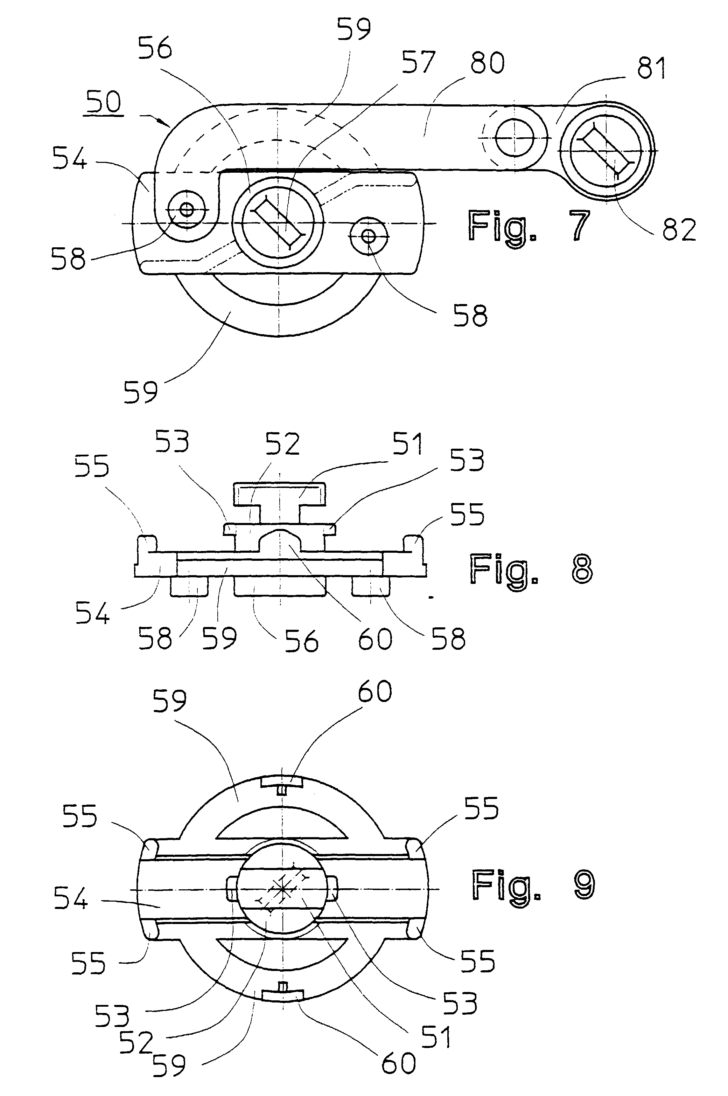

Das Montageelement 20 ist im Bodenbereich aufgebrochen dargestellt. Man erkennt somit das eigentliche Bodenteil 21 sowie den Zwischenboden 70, dazwischen ein Klemmteil 50, welches durch eine Öffnung im Bodenteil 21 hindurchgesteckt ist. Sein T-förmiger Klemmkopf 51 kann in die Längsnut 3 eingeführt werden, wie dies in Fig. 4 dargestellt ist. Nach einer 90-Grad-Drehung legt sich der Klemmkopf 51 gegen die Wände der Längsnut 3 und preßt das Montageelement 20 bzw. dessen Füße 23 gegen die Kanalrückwand 2. Etwaige Abmessungstoleranzen werden durch eine federnde Ausgestaltung des Klemmteils 50, wie sie noch anhand der fig. 7 bis 9 erläutert werden soll, ausgeglichen.

Falls das Klemmteil 50 direkt betätigt werden soll, ist im Zwischenboden 70 eine öffnung 72 für einen Schraubendreher vorgesehen.

Um das Klemmteil 50 exakter führen zu können, ist an der Unterseite des Zwischenbodens 70 ein Führungsring 73 angeformt, der mit einem entsprechenden Führungszylinder 56 an der Oberseite des Klemmteils 50 zusammenwirkt.

Fig. 5 zeigt einen Blick auf die Innenseite des Bodenteils 21 des Montageelements 20. Man erkennt die zentrische öffnung 22, durch die das Klemmteil 50 hindurchgesteckt wird. Konzentrisch um die öffnung 22 herum erkennt man zunächst zwei Rastrampen 34 mit Rastvertiefungen 35 im gegenseitigen Winkelabstand von 45 Grad sowie zwei Hubrampen 33. Deren Aufgaben und Konstruktion soll anhand der Fig. 7 bis 9 noch näher erläutert werden.

Schließlich erkennt man in Fig. 5 noch einen Lagerzapfen 36, der unter der Deckelöffnung 30 im Klappdeckel 28 positioniert ist und ein mit Schraubendreher zu betätigendes Drehelement 81 führt, falls das Klemmteil 50 nicht direkt, sondern indirekt über eine Schubstange 80 betätigt wird (Fig. 7). Um den Lagerzapfen 36 herum erkennt man noch eine Führungsrippe 37 mit Anschlag für das Drehelement 81.

Fig. 6 zeigt die Unterseite des Montageelements 20. Man erkennt zunächst die Füße 23 sowie die zentrischen Führungsnocken 24, die mit der Längsnut 3 an der Kanal rückwand 2 korrespondieren. Man erkennt ferner die zentrische öffnung 22. Diese ist von einer Stufensenkung 32 mit eingeformten Montagebuchten 38 umgeben, deren Aufgabe anhand der Fig. 7 bis 9 noch näher erläutert werden soll.

Die Fig. 7, 8 und 9 zeigen das Klemmteil 50 in Draufsicht, Seitenansicht und Druntersicht. Dieses besitzt eine kurze Klemmteilachse 52, die mit der zentrischen öffnung 22 im Bodenteil 21 des Montageelements 20 korrespondiert. An der Außenseite erkennt man ferner den T-förmigen Klemmkopf 51 sowie zwei kurze radiale Haltenasen 53. Diese Haltenasen 53 passen durch die Montagebuchten 38 und laufen in der bereits erwähnten Stufensenkung 32 auf der Außenseite des Bodenteils 21 des Montageelements 20; sie gewährleisten den Halt des Klemmteils 50 in der zentrischen öffnung 22, bestimmen im Verein mit der rampenartigen Stufensenkung 32 die Ausgangslage des Klemmkopfes 51 und geben die Hubbewegung des Klemmteils 50 frei.

An dem der Innenseite des Montageelements 20 zugewandten Ende der Klemmteilachse 52 erkennt man zunächst einen radialen Federbalken 54 in Form eines zweiarmigen Hebels mit Gleitnocken 55 an seinen beiden Enden. Diese Gleitnocken 55 laufen auf den Hubrampen 33 an der Innenseite des Bodenteils 21 des Montageelements 20. Sie wandeln die Drehbewegung des Klemmteils 50 in die Hubbewegung um, die für die Klemmverbindung zwischen Montageelement 20 und Installationskanal 1 erforderlich ist. Dabei sind die Hubrampen 33 so geformt, daß diese Hubbewegung erst nach einem Drehwinkel von etwa 45 Grad einsetzt, so daß das Montageelement 20 zunächst zwar im Installationskanal 1 montiert, aber noch frei verschoben werden kann.

Am Klemmteil 50 sind ferner angeformt Rastfederarme 59 mit Rastnocken 60. Die Federkraft der Rastfederarme 59 ist geringer als die des Federbalkens 54. Die Rastfederarme 59 bzw. Rastnocken 60 korrespondieren mit den Rastrampen 34 bzw. Rastvertiefungen 35 auf der Innenseite des Bodenteils 21 des Montageelements 20. Sie sind dafür verantwortlich, daß die für die Montage an der Baustelle wichtigen Winkelpositionen des Klemmteils 50 - 0-Grad-Stellung zum Einsetzen und Herausnehmen des Montageelements 20, 45-Grad-Stellung zum seitlichen Justieren der Position des Montageelements 20 im Installationskanal 1, 90-Grad-Stellung für die endgültige Fixierung des Montageelements 20 im Installationskanal 1 - unmißverständlich definiert sind.

Fig. 7 zeigt ferner die Möglichkeit, das Klemmteil 50 mittels eines Schub-Kurbel-Getriebes, bestehend aus einer Schubstange 80 und einem Drehelement 81 mit Schraubendreherschlitz 82, zu betätigen, wobei das Drehelement 81 auf dem Lagerzapfen 36 sitzt und im Schutzzylinder 71 geführt ist.

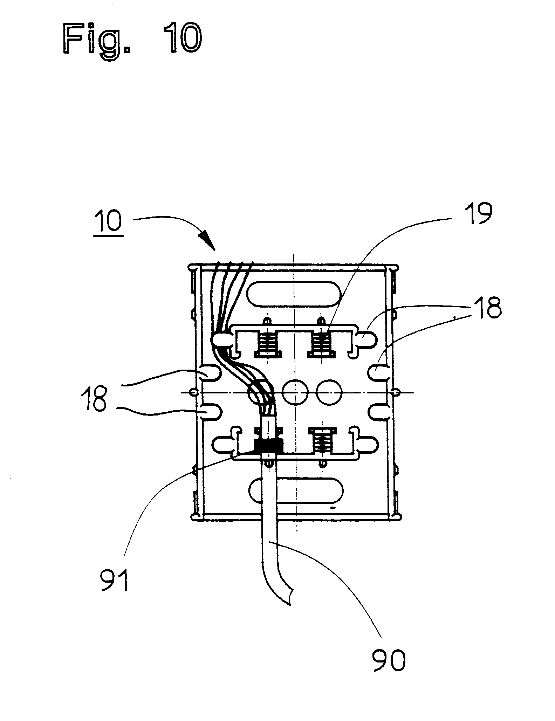

Fig. 10 zeigt einen Blick auf die Unterseite des Elektro-Installationsgeräts 10 der Fig. 2 und 3. Man erkennt angeformte Adernführungen 18 und Kabelhalter 19, mit deren Hilfe Einzeldrähte oder auch Kabel 90 so fixiert werden können, daß die Anschlußstellen ausreichend zugent lastet sind. Dabei werden zur Befestigung des Kabels 90 an den Kabelhaltern 19 handelsübliche Kabelbinder 91 verwendet.

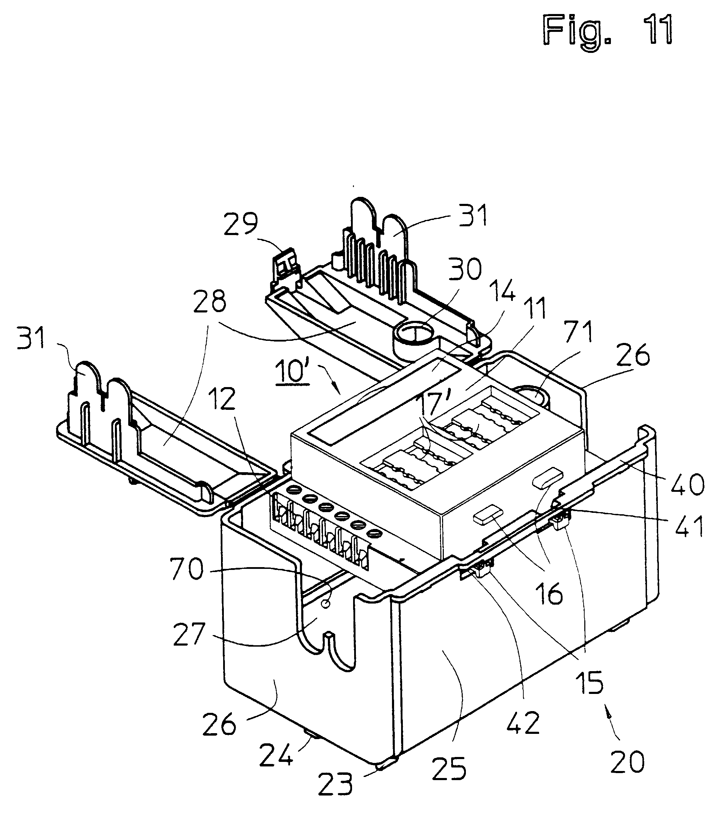

Fig. 11 zeigt in einer der Fig. 2 entsprechenden Darstellung als weiteres Beispiel für ein Elektro-Installationsgerät eine sogenannte TAE-Funktionseinheit 10', wie sie in Deutschland als Steckverbindung für Telekommunikationseinrichtungen - Telefon, Telefax, Anrufbeantworter, Modern usw. - verwendet wird. Während die handelsüblichen TAE-Funktionseinheiten maximal drei parallele Steckvorrichtungen besitzen können, besteht dank der erfindungsgemäßen Konstruktion die Möglichkeit, beispielsweise vier parallele Steckvorrichtungen 17' vorzusehen. Davon können vorzugsweise je zwei auf eine von zwei Anschlußleisten 12 geschaltet sein. Auf diese Weise können zwei getrennte Telekommunikationsverbindungen auf eine Funktionseinheit 10' geschaltet werden. Werden die beiden Anschlußleisten 12 elektrisch verbunden, lassen sich vier Telekommunikationsgeräte an einer Telekommunikationsleitung anstecken.

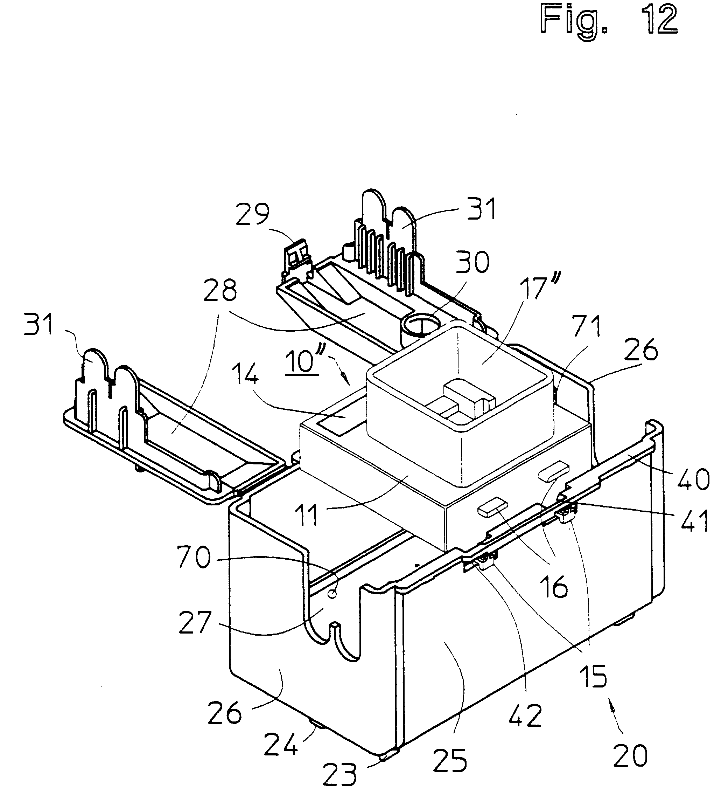

Fig. 12 zeigt als letztes Beispiel ein Elektro-Installationsgerät 10'', welches mit einem firmenspezifischen Datenstecker 17'' ausgerüstet ist, wie er für die Datenübertragung zwischen Computern verwendet wird.

Wie die Fig. 2, 11 und 12 zeigen, lassen sich Elektro-Installationsgeräte der unterschiedlichsten Ausführungen mit immer demselben Montageelement 20 verwenden. In allen Fällen erfolgt die Befestigung der Geräteeinbaudose 10, 10', 10'' durch ein Bajonett. Nach dem Schließen der Klappdeckel 28 ist ein versehentliches Lösen nicht mehr möglich.

## Patentansprüche

1. Montageelement (20) zum lösbaren Befestigen von Elektro-Installationsgeräten (10) in Installationskanälen (1), die an ihrer Kanalrückwand (2) eine Längsnut (3) mit etwa T-förmigem Querschnitt besitzen, umfassend ein etwa rechteckiges Bodenteil (21) mit einer zentrischen öffnung (22), in die ein Klemmteil (50) drehbar sowie heb- und senkbar eingesetzt ist, das von vorn betätigt werden kann, dadurch gekennzeichnet, daß das Klemmteil (50) einen T-förmigen Klemmkopf (51) und radiale Haltenasen (53) auf der Außenseite des Bodenteils (21) sowie einen Federbalken (54) und wenigstens einen Rastfederarm (59) auf der Innenseite des Bodenteils (21) besitzt und daß das Bodenteil (21) auf seiner Außenseite eine Stufensenkung (32), die die Haltenasen (53) aufnimmt, und auf seiner Innenseite wenigstens eine Hubrampe (33), die mit dem Federbalken (54) zusammenwirkt, sowie wenigstens eine Rastrampe (34), die mit dem Rastfederarm (59) zusammenwirkt, besitzt.

2. Montageelement nach Anspruch 1, dadurch gekennzeichnet, daß am Ende des Federbalkens (54) Gleitnocken (55), am Ende des Rastfederarms (59) Rastnocken (60) vorgesehen sind.

3. Montageelement nach Anspruch 1 oder 2, dadurch gekennzeichnet, daß der Federbalken (54) als doppelarmiger Hebel ausgebildet ist und daß zwei Hubrampen (33), zwei Rastfederarme (59) und zwei Rastrampen (34) vorgesehen sind.

4. Montageelement nach einem der Ansprüche 1 bis 3, dadurch gekennzeichnet, daß die Rastfederarme (59) als Kreisbogenabschnitte geformt sind.

5. Montageelement nach einem der Ansprüche 1 bis 4, dadurch gekennzeichnet, daß der Federbalken (54) und die Rastfederarme (59) bzw. deren Rastnocken (60) rechtwinklig zueinander stehen, daß die Haltenasen (53) mit dem Federbalken (54) fluchten bzw. zu den Rastfederarmen (59) bzw. deren Rastnocken (60) senkrecht stehen und daß die Montagebuchten (38) für die Haltenasen (53), die Hubrampen (33) und die Rastrampen (34) im 45-Grad-Winkel zu der Längsachse (7) des Bodenteils (21) angeordnet sind.

6. Montageelement nach einem der Ansprüche 1 bis 5, dadurch gekennzeichnet, daß am Klemmteil (50), vorzugsweise am Federbalken (54) wenigstens ein Achszapfen (58) angeformt ist, an dem gegebenenfalls eine Schubstange (80) anlenkbar ist.

7. Montageelement nach einem der Ansprüche 1 bis 6, dadurch gekennzeichnet, daß die Rastrampe (34) drei Rastvertiefungen (35) im Abstand von je 45 Grad besitzt.

8. Montageelement nach einem der Ansprüche 1 bis 7, dadurch gekennzeichnet, daß das Bodenteil (21) mit zwei Längswänden (25) und zwei Querwänden (26) zu einer Gerätedose ergänzt ist, vorzugsweise mit rechteckiger Grundfläche, und daß eine Kabeleinführung (27) ausgespart ist, vorzugweise in einer oder in beiden Querwänden (26).

9. Montageelement nach Anspruch 8, dadurch gekennzeichnet, daß zwei Kabeleinführungen (27) vorgesehen sind, die von der Mittelebene (7) aus zur selben Längswand (25) hin verschoben sind.

10. Montageelement nach Anspruch 8 oder 9, dadurch gekennzeichnet, daß an wenigstens einem Endbereich der offenen Oberseite der Gerätedose ein Deckel (28), vorzugsweise Klappdeckel, angelenkt ist, der im geschlossenen Zustand das Elektro-Installationsgerät (10) blockiert.

11. Montageelement nach Anspruch 10, dadurcn gekennzeichnet, daß am Deckel (28) eine Abdeckung (31) angeformt ist, die unbenutzte Kabeleinführungen (27) verschließt, wobei einer der Deckel (28) eine Deckelöffnung (30) aufweist.

12. Montageelement nach einem der Ansprüche 8 bis 11, dadurch gekennzeichnet, daß über dem Klemmteil (50) in der Gerätedose ein Zwischenboden (70) montiert ist, daß der Zwischenboden (70) eine Öffnung (72) zum Betätigen des Klemmteils (50) besitzt und daß auf dem Zwischenboden (70) ein Schutzzylinder (71) errichtet ist, der gegebenenfalls mit der Deckelöffnung (30) fluchtet.

13. Montageelement nach einem der Ansprüche 8 bis 12, dadurch gekennzeichnet, daß die Längswände (25) der Geratedose eine Randverstärkung (40) aufweisen und daß in die Längswände (25) Bajonettverschlußnuten (41) eingeformt sind.

14. Montageelement nach Anspruch 13, dadurch gekennzeichnet, daß jede Bajonettverschlußnut (41) in einer die Längswand (25) durchbrechenden Bajonettöffnung (42) endet.

## Claims

1. Mounting element (20) for securing electrical installation appliances (10) in a removable manner in installation ducts (1), which have a longitudinal slot (3) with an approximately T-shaped cross section in their back wall (2), comprising an approximately rectangular bottom part (21) with a central opening (22), in which a clamping part (50) is inserted such that it can be rotated as well as raised and lowered, which part can be actuated from the front, characterised in that the clamping part (50) has a T-shaped clamping head (51) and radial retaining lugs (53) on the outside of the bottom part (21) as well as a spring bar (54) and at least one stop spring arm (59) on the inside of the bottom part (21), and that the bottom part (21) has at its outside a stepped depression (32), which receives the retaining lugs (53), and at its inside at least one lifting ramp (33), which co-operates with the spring bar (54), as well as at least one stop ramp (34), which co-operates with the stop spring arm (59).

2. Mounting element according to claim 1, characterised in that sliding cams (55) are provided at the end of the spring bar (54) and stop cams (60) at the end of the stop spring arm (59).

3. Mounting element according to claim 1 or 2, characterised in that the spring bar (54) is constructed as a double-armed lever, and that two lifting ramps (33), two stop spring arms (59) and two stop ramps (34) are provided.

4. Mounting element according to one of claims 1 to 3, characterised in that the stop spring arms (59) are formed as circular arc sections.

5. Mounting element according to one of claims 1 to 4, characterised in that the spring bar (54) and the stop spring arms (59) or the stop cams (60) thereof are at a right angle to one another, that the retaining lugs (53) are in alignment with the spring bar (54) or are perpendicular to the stop spring arms (59) or the stop cams (60) thereof, and that the mounting bays (38) for the retaining lugs (53), the lifting ramps (33) and the stop ramps (34) are disposed at an angle of 45 degrees to the longitudinal axis (7) of the bottom part (21).

6. Mounting element according to one of claims 1 to 5, characterised in that at least one pivot pin (58) is moulded onto the clamping part (50), preferably onto the spring bar (54), to which pivot pin a connecting rod (80) may be coupled.

7. Mounting element according to one of claims 1 to 6, characterised in that the stop ramp (34) has three stop recesses (35) at respective spacings of 45°.

8. Mounting element according to one of claims 1 to 7, characterised in that two longitudinal walls (25) and two transverse walls (26) are added to the bottom part (21) to produce an appliance box, preferably with a rectangular base area, and that a cable inlet (27) is left open, preferably in one or in both transverse wall(s) (26).

9. Mounting element according to claim 8, characterised in that, viewed from the centre plane (7), two cable inlets (27) are provided displaced towards the same longitudinal wall (25).

10. Mounting element according to claim 8 or 9, characterised in that a lid (28), preferably a hinged lid, is coupled to at least one end region of the open top side of the appliance box, which lid blocks off the electrical installation appliance (10) in the closed state.

11. Mounting element according to claim 10, characterised in that a cover (31) is moulded onto the lid (28), which cover closes unused cable inlets (27), one of the lids (28) having a lid opening (30).

12. Mounting element according to one of claims 8 to 11, characterised in that an intermediate bottom (70) is mounted above the clamping part (50) in the appliance box, that the intermediate bottom (70) has an opening (72) for actuating the clamping part (50), and that a protective cylinder (71) is mounted on the intermediate bottom (70), which cylinder may be in alignment with the lid opening (30).

13. Mounting element according to one of claims 8 to 12, characterised in that the longitudinal walls (25) of the appliance box have an edge reinforcement (40), and that bayonet coupling slots (41) are formed into the longitudinal walls (25).

14. Mounting element according to claim 13, characterised in that each bayonet coupling slot (41) ends in a bayonet opening (42) which passes through the longitudinal wall (25).

## Revendications

1. Elément de montage (20) pour fixer de manière amovible des appareils d'installation électrique (10) dans des gaines de montage (1) comportant à leur paroi arrière (2) une rainure longitudinale (3) ayant une section sensiblement en T, entourant une partie de fond (21) sensiblement rectangulaire avec une ouverture centrale (22), dans laquelle est disposée de manière pivotante une pièce de blocage (50) que l'on peut lever et abaisser, et qui peut être actionnée de l'avant, caractérisé en ce que la pièce de blocage (50) possède une tête de blocage (51) en forme de T et des tenons de maintien (53) radiaux sur la face extérieure de la pièce de fond (21) ainsi qu'une barre élastique (54) et au moins un bras élastique d'encliquetage (59) sur la face intérieure de la pièce de fond (21) et que la pièce de fond (21) possède sur sa face extérieure un décrochement (32) qui reçoit les tenons de maintien (53), et sur sa face intérieure au moins une rampe de levage (33) qui coopère avec la barre élastique (54), ainsi qu'au moins une rampe d'encliquetage (34) qui coopère avec le bras élastique d'encliquetage (59).

2. Elément de montage selon la revendication 1, caractérisé en ce qu'en bout de la barre élastique (54), des cames de coulissement (55) et en bout du bras élastique d'encliquetage (59) des cames d'encliquetage (60) sont prévues.

3. Elément de montage selon les revendications 1 ou 2, caractérisé en ce que la barre élastique (54) a la forme d'un levier à double bras et que deux rampes de levage (33), deux bras élastiques d'encliquetage (59) et deux rampes d'encliquetage (34) sont prévus.

4. Elément de montage selon l'une quelconque des revendications 1 à 3, caractérisé en ce que les bras élastiques d'encliquetage (59) ont la forme de sections d'arc de cercle.

5. Elément de montage selon l'une quelconque des revendications 1 à 4, caractérisé en ce que la barre élastique (54) et les bras élastiques d'encliquetage (59) respectivement leurs cames d'encliquetage (60), sont disposés perpendiculairement, que les tenons de maintien (53) sont alignés avec les barres élastiques (54), respectivement sont perpendiculaires avec les bras élastiques d'encliquetage (59) respectivement leurs tenons d'encliquetage (60) et que les encoches de montage (38) pour les tenons de maintien (53), les rampes de levage (33) et les rampes d'encliquetage (34) sont disposées selon un angle de 45 degrés par rapport à l'axe longitudinal (7) de la pièce de fond (21).

6. Elément de montage selon l'une quelconque des revendications 1 à 5, caractérisé en ce que la pièce de blocage (50), de préférence la barre élastique (54), comporte au moins un tourillon d'axe (58) autour duquel une barre de poussée (80) peut éventuellement être guidée.

7. Elément de montage selon l'une quelconque des revendications 1 à 6, caractérisé en ce que la rampe d'encliquetage (34) possède trois renfoncements d'encliquetage (35) écartés chacun de 45 degrés.

8. Elément de montage selon l'une quelconque des revendications 1 à 7, caractérisé en ce que la pièce de fond (21) est complétée en boîte d'appareil par deux parois longitudinales (25) et deux parois transversales (26), de préférence avec une surface de fond perpendiculaire, et qu'une traversée de câble (27) est réservée, de préférence dans l'une ou dans les deux parois perpendiculaires (26).

9. Elément de montage selon la revendication 8, caractérisé en ce que deux traversées de câble (27) sont prévues, qui sont décalées du niveau médian (7) vers la même paroi longitudinale (25).

10. Elément de montage selon les revendications 8 ou 9, caractérisé en ce qu'au moins dans une zone d'extrémité de la face supérieure ouverte de la boîte d'appareil, est articulé un couvercle (28), de préférence un couvercle basculant qui, à l'état fermé, bloque l'appareil d'installation électrique (10).

11. Elément de montage selon la revendication 10, caractérisé en ce qu'une couverture (31) est formée sur le couvercle (28) qui obture les traversées de câble (27) inutilisées, l'un des couvercles (28) présentant une ouverture (30).

12. Elément de montage selon l'une quelconque des revendications 8 à 11, caractérisé en ce qu'au-dessus de la pièce de blocage (50) un fond intermédiaire (70) est monté dans la boîte d'appareil, que le fond intermédiaire (70) possède une ouverture (72) pour actionner la pièce de blocage (50) et que sur le fond intermédiaire (70) s'élève un cylindre de protection (71), qui s'aligne éventuellement avec l'ouverture de couvercle (30).

13. Elément de montage selon l'une quelconque des revendications 8 à 12, caractérisé en ce que les parois longitudinales (25) de la boîte d'appareil présentent un renforcement de bord (40) et que des rainures de verrouillage baïonnette (41) sont formées dans les parois longitudinales (25).

14. Elément de montage selon la revendication 13, caractérisé en ce que chaque rainure de verrouillage baïonnette (41) se termine dans l'une des ouvertures baïonnette (42) traversant la paroi latérale (25).
